Europäisches Patentamt

(19) European Patent Office

Office européen des brevets

(11) Publication number: **0 021 583**
**B1**

(12) **EUROPEAN PATENT SPECIFICATION**

(45) Date of publication of patent specification: **27.10.82**

(51) Int. Cl.³: **B 01 D 13/00,**
**B 65 H 54/56, B 65 H 81/00**

(21) Application number: **80301566.8**

(22) Date of filing: **13.05.80**

(54) **Method of making coreless hollow filament bundles for separatory modules.**

(30) Priority: **28.06.79 US 52747**

(43) Date of publication of application:
**07.01.81 Bulletin 81/1**

(45) Publication of the grant of the patent:
**27.10.82 Bulletin 82/43**

(84) Designated Contracting States:
**AT BE CH DE FR GB IT LI LU NL**

(56) References cited:
**FR - A - 2 380 362**
**US - A - 3 391 042**

(73) Proprietor: **ALBANY INTERNATIONAL CORP.**
**1 Sage Road**
**Menands New York 12201 (US)**

(72) Inventor: **Sebring, Robert E.**
**17 Orchard Circle**
**Westwood Massachusetts 02090 (US)**
Inventor: **Coplan, Myron J.**
**47 Speen Street**
**Natick Massachusetts 01760 (US)**

(74) Representative: **Jennings, Roy Alfred et al,**
**GILL, JENNINGS & EVERY 53/64 Chancery Lane**
**London WC2A 1HN (GB)**

Courier Press, Leamington Spa, England.

Method of making coreless hollow filament bundles for separatory modules

The use of hollow monofilaments in connection with reverse osmosis and other separation and purification procedures is well known and is disclosed, for example, in United States specification No. 3,422,008, and in report PB233,102 of the Monsanto Research Corporation, dated September, 1973, to the U.S. Department of the Interior.

Hollow filament separatory modules generally comprise a large number of hollow filaments with permeable walls arranged in a cylindrical bundle inside a pressure vessel. The bundle of filaments is sealed at one or both ends in a potted barrier or tube sheet. Ends of the filaments are exposed and are sliced open outside the tube sheet to provide fluid inlet or outlet openings leading to or from the insides of the filaments.

Various methods are known for preparing the filament bundle. Many of these methods are intricate and many involve complex steps of winding with special machinery and the utilization of porous sheets which act as support members.

In a separatory module, the assembled multi-filament bundle must meet a number of requirements. Among these is that it must have a geometric arrangement which provides a fairly high packing density of the filaments and which at the same time minimizes channeling of the fluid between the filaments as it is fed to the outside of the bundle and passes among the filaments. Therefore, it is necessary to prevent the filaments from packing densely in certain areas and loosely in other areas of the bundle. In other words, packing density of the filaments in the bundle should be both uniform and in the order of about 25% to 60%, if the main advantages of the use of hollow filament separatory modules are to be achieved. In view of these requirements the use of various filament assembly techniques is frequently unattractive.

A bundle of filaments assembled as a collection of axially parallel filaments loses some effectiveness because there is an opportunity for low flow resistance axial channels to occur between the filaments at some locations, with a resulting short circuiting of the flow of the fluid supplied to the module and an inequality of flow distribution to the outsides of and through the walls of all of the individual filaments. There is also the likelihood of neighbouring filaments being pressed against each other tangentially for long lengths, thus reducing the effective surface area of each such filament.

An advantageous arrangement to attain the desired result is disclosed in United States Specification No. 4,045,851. In this arrangement, an annular bundle of hollow filaments comprises filaments would in a plurality of layers at a selected helix angle with alternate layers being of opposite helix direction. Further benefits of having a helical orientation of the filaments with the filaments in alternate layers crossing over each other are described in United States Specification No. 4,105,548 where there is a three-dimensional network of filaments in a spiral wound structure of hollow filaments in multiple layers. In both these arrangements, however, the helical structure is achieved by winding the filaments on a mandrel, resulting thereafter in the formation of an annular bundle of filaments.

While these techniques provide the desired relatively uniform fine pore distribution of spaces among the filaments, in both cases the preparation of an annular bundle of filaments tends to offset some of the desired advantages of the use of a multi-filament module. First, it is necessary to provide a core element filling the filament-free centre of the annular bundle and this tends to reduce the effective total filament surface area attainable within the module of which the filaments form a part. Second, the preparation of an annular bundle by wrapping filaments helically around a mandrel inherently limits the steepness of the helix to that attainable without undue slippage between adjacent layers of filaments because slippage is restrained only by the frictional resistance of filament on filament. It would be desirable to provide helically wound filaments in solid bundles without any central core and at extremely steep helix angles for some purposes. This can be achieved to some limited extent by the techniques disclosed in United States Specification No. 4,045,851. There nevertheless remains some residue of a hollow central region in a bundle made by the method described in that specification and it is therefore an object of the present invention to provide a method of making a filament bundle with a steep helix angle and no hollow central region at all.

According to this invention, a method of making a coreless hollow filament bundle for a separatory module comprises the steps of providing first and second axially spaced rotary members having angularly spaced filament receiving arms, rotating the rotary members in the same direction as each other, traversing a continuous hollow filament to and fro between the members and looping it around an arm on one member and around an arm on the other member alternately to form a series of lengths of filaments between the members with successive lengths lying along left handed and right handed helices alternately until the lengths of filament have built up in layers into a coreless bundle with the lengths of filament lying on oppositely handed helices having multiple cross over points with each other.

With a bundle made in this way, in use, the fluid flow outside the filaments will have equal access to the surfaces of all the filaments because they are wound helically with a traverse, so that they extend from one end of the bundle to the other while passing circumferentially around the bundle. Successive lengths of filament will cross each other, with only a point contact at the crossover, and with a network of fluid passages between the filaments.

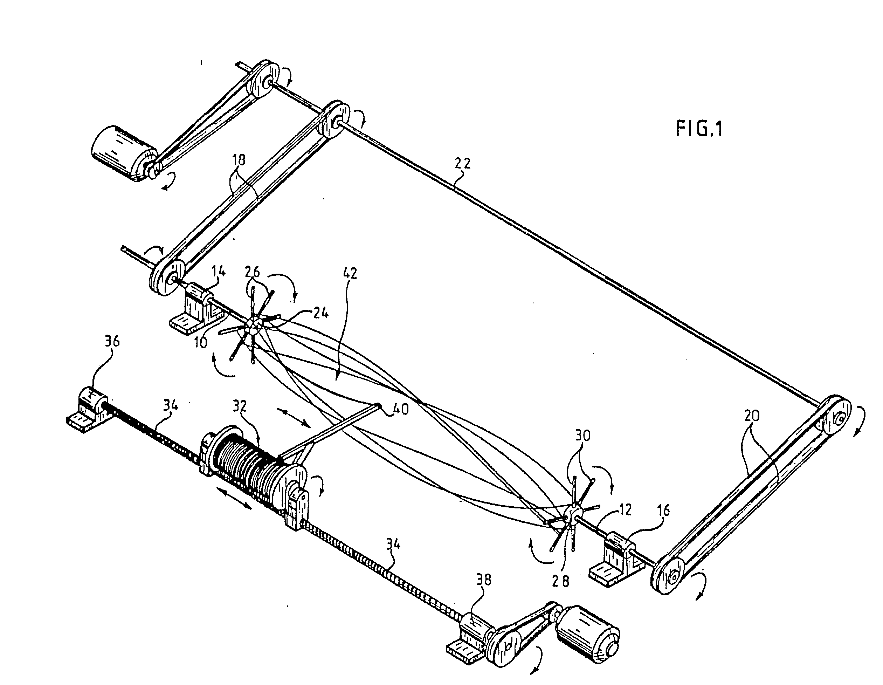

An example of a method in accordance with the invention will now be described with reference to the accompanying drawing which is a diagrammatic perspective view of the winding of a filament to form a bundle by the method in accordance with the invention.

A winding machine for carrying out the method comprises shafts 10 and 12 which are mounted in bracket supported bearings 14 and 16 respectively at the ends of the machine. The shafts 10 and 12 are rotated at the same speed and in the same direction as each other by respective belts 18 and 20 from a common jack shaft 22. The shafts 10 and 12 carry spiders 24 and 28, respectively, with radial spokes 26 and 30.

A yarn supply package 32 carries a supply of hollow filament, and is reciprocated along a shaft 34 journaled in bearings 36 and 38 as the stub shafts 10 and 12 are rotated. A traversing guide 40 carries the hollow filament past the rotating spokes 26 and 30 alternately, so that the filament is looped around a spoke at each end of its traversing movement. When there are equal numbers of spokes on the two spiders 24 and 28 as shown, the helix angles of all the lengths of filament between the spokes will be equal provided that the speed of reciprocation of the guide 40 remains constant in relation to the speed of rotation of the spiders. If, however, there are different numbers of spokes on the two spiders, for example six on the spider 24 and five on the spider 28, the winding will result in a distributed progression of loops of filament around the bundle being formed and ultimately a symmetrical and cylindrical bundle 42 will result.

It has been found desirable in such a separatory bundle that all of the filaments in the bundle be of approximately the same length between their ends and this can be achieved by maintaining a constant helix angle during the course of the helical winding. It may be necessary, however, in the production of the coreless bundle to have the first few layers of filaments wound shorter, since they are stretched directly from one of the spokes 26 to one of the spokes 30, without any previous filaments for them to be wound over as they pass round the spokes. Once the winding is initiated, all succeeding layers can be made equal in length if the helix angle is maintained constant during the winding operation.

There can be a plurality of supply packages of hollow filaments so that a plurality of filaments are wound simultaneously in order to shorten the time necessary to wind on the required number of turns. The winding provides a pattern of left and right hand helices with multiple crossovers. After winding, individual sections of the bundle can be cut off and provided with potting end seals for insertion in a cylindrical chamber to form a separatory module.

## Claims

1. A method of making a coreless hollow filament bundle for a separatory module, the method comprising the steps of providing first and second axially spaced rotary members (24, 28) having angularly spaced filament receiving arms (26, 30), rotating the rotary members (24, 28) in the same direction as each other, traversing a continuous hollow filament to and fro between the members (24, 28) and looping it around an arm (26, 30) on one member (24, 28) and around an arm (26, 30) on the other member (24, 28) alternately to form a series of lengths of filament between the members (24, 28) with successive lengths lying along left handed and right handed helices alternately until the lengths of filament have built up in layers into a coreless bundle with the lengths of filament lying on oppositely handed helices having multiple crossover points with each other.

2. A method according to Claim 1, in which a constant helix angle is maintained in the oppositely handed helices as the bundle is built up.

3. A method according to Claim 1 or Claim 2, in which after the bundle has been built up, it is cut transversely into sections and potting end seals are provided on the sections to form bundles for individual modules.

## Revendications

1. Procédé de fabrication d'un faisceau de filaments creux sans âme pour un module de séparation, le procédé comprenant les opérations qui consistent à prévoir des premier et second éléments rotatifs (24, 28) espacés axialement, ayant des bras (26, 30) de réception de filaments espacés angulairement, à faire tourner les éléments rotatifs (24, 28) dans le même sens l'un par rapport à l'autre, à faire effectuer une course de va-et-vient à un filament creux continu entre les éléments (24, 28) et à former une boucle avec ce filament autour d'un bras (26, 30) d'un élément (24, 28) et autour d'un bras (26, 30) de l'autre élément (24, 28), alternativement, pour former une série de longueurs de filament entre les éléments (24, 28), des longueurs successives s'étendant suivant des hélices de pas à gauche et de pas à droite, alternativement, jusqu'à ce que les longueurs de filament se soient accumulées en couches formant un faisceau sans âme, les longueurs de filament qui s'étendent suivant des hélices de pas opposé ayant des points multiples de croisement entre elles.

2. Procédé selon la revendication 1, dans lequel un angle d'hélice constant est maintenu dans les hélices de pas opposé pendant la formation du faisceau.

3. Procédé selon la revendication 1 ou la revendication 2, dans lequel, après que le faisceau a été formé, il est coupé transversalement en sections et des joints extrêmes d'enrobage sont appliqués sur les sections pour former des faisceaux pour modules individuels.

## Patentansprüche

1. Verfahren zur Herstellung kernloser Hohlfadenbündel für Trennungsmoduln, gekennzeichnet durch folgende Stufen: Vorsehen von ersten und zweiten axial voneinander beabstandeten Drehgliedern (24, 28) mit winklig beabstandet angeordneten Faser-Aufnahmearmnen (26, 30), Drehen der Drehglieder (24, 28) in gleichsinniger Richtung miteinander, Hin- und Herquerbewegen eines kontinuierlichen Hohlfadens zwischen den Gliedern (24, 28) und abwechselndes Umwickeln bzw. Ketteln des Fadens um einen Arm (26) auf dem einen Glied (24) und um den anderen Arm (30) des anderen Gliedes (28) unter Ausbildung einer Reihe von Fadenlängen zwischen den Gliedern (24, 28), wobei die aufeinanderfolgenden Längen abwechselnd entlang links- und rechts-gerichteter Helices bzw. Spiralen liegen, bis die Fadenlängen in Schichten bis zu einem kernlosen Bündel aufgebaut worden sind, wobei die auf entgegengesetzt gerichteten Spiralen liegenden Fadenlängen mehrfache Kreuzungspunkte miteinander besitzen.

2. Verfahren nach Anspruch 1, dadurch gekennzeichnet, daß ein konstanter Helix- bzw. Schraubenwinkel in den entgegengesetzt gerichteten Helices aufrechterhalten wird, während das Bündel aufgebaut wird.

3. Verfahren nach Anspruch 1 oder 2, dadurch gekennzeichnet, daß das Bündel, nachdem es aufgebaut worden ist, quer in Abschnitte zerschnitten wird, und daß Verguß- bzw. Naßdekatur-Enddichtungen auf den Abschnitten vorgesehen werden, um für die einzelnen Module Bündel auszubilden.

FIG.1

0021583